# EUROPÄISCHE PATENTSCHRIFT

(11) **EP 3 638 423 B1**
(45) Veröffentlichungstag und Bekanntmachung des Hinweises auf die Patenterteilung: **18.06.2025**
(21) Anmeldenummer: 19725934.4
(22) Anmeldetag: 07.05.2019
(51) Int. Cl.: B02C 17/14, B02C 19/16

(54) **SCHWINGMÜHLE UND VERFAHREN ZUM VERMAHLEN EINES MAHLGUTES**
VIBRATION MILL AND METHOD FOR MILLING A MILLING MATERIAL
BROYEUR OSCILLANT ET PROCÉDÉ DE BROYAGE D'UN PRODUIT À BROYER

(30) Priorität: 01.06.2018 DE 102018113139; 19.03.2019 DE 102019106915
(43) Veröffentlichungstag der Anmeldung: 22.04.2020
(73) Patentinhaber: Retsch GmbH, 42781 Haan (DE)
(72) Erfinder: ORTH, Uwe, 52156 Monschau (DE); DRECHSLER, Stefan, 45529 Hattingen (DE); JANETTA, Frank, 46238 Bottrop (DE); MÜHLIG, Alexander, 50859 Köln (DE)
(74) Vertreter: Schleitzer, Dirk-Karsten
(86) Internationale Anmeldenummer: PCT/EP2019/061622
(87) Internationale Veröffentlichungsnummer: WO 2019/228764

(56) Entgegenhaltungen:
- CN-U- 202 447 149

## Beschreibung

Die Erfindung betrifft eine Schwingmühle für wenigstens zwei in horizontaler Lage Schwingungen ausführende Mahlbecher, mit einem mehrteiligen Pendelantrieb, wobei der Pendelantrieb wenigstens eine um eine vertikale Exzenterachse drehbar gelagerte Exzenterwelle, wenigstens zwei jeweils um eine vertikale Schwingachse schwingfähig gelagerte und über Koppeln mit der Exzenterwelle verbundene Schwingen zur Halterung der Mahlbecher, eine mit der Exzenterwelle gekoppelte Motoreinheit als Antrieb für die Exzenterwelle und gegebenenfalls weitere Bauteile aufweist, wobei eine Drehbewegung der Exzenterwelle über die Koppeln in eine Schwingungsbewegung der Schwingen umwandelbar ist und wobei der Schwerpunkt des Pendelantriebs in einer horizontalen Schwerpunktebene von beiden Schwingachsen zumindest im Wesentlichen gleichbeabstandet ist.

Darüber hinaus betrifft die vorliegende Erfindung ein Verfahren zum Vermahlen eines Mahlgutes mit der eingangs genannten Schwingmühle.

Aus dem Stand der Technik ist die Schwingmühle "MM 400" der Anmelderin bekannt. Bei der bekannten Schwingmühle handelt es sich um ein kompaktes Tischgerät, welches speziell für die Trocken-, Nass- und Kryogenvermahlung kleiner Probenmengen entwickelt worden ist. Die "MM 400" ist dazu ausgelegt, Pulver und Suspensionen zu mischen und zu homogenisieren. Außerdem ist die Schwingmühle zum Aufschließen von biologischen Zellen zur DNA/RNA- sowie Proteingewinnung geeignet. Anwendungsbeispiele für die bekannte Schwingmühle sind die Behandlung von Abfallproben, Böden, chemischen Produkten, Drogen, Elektronikschrott, Erzen, Getreide, Gewebe, Glas, Haaren, Holz, Keramik, Klärschlamm, Knochen, Kohle, Koks, Kunststoffen, Legierungen, Mineralien, Ölsaaten, Papier, Pflanzenteilen, Stroh, Tabak, Tabletten, Textilien, Tiernahrung und Wolle. Es versteht sich, dass die vorgenannte Aufzählung nicht abschließend ist.

Die bekannte Schwingmühle "MM 400" zeichnet sich durch eine reproduzierbare, effiziente Zerkleinerung, Mischung und Homogenisierung aus. Durch den Schwingantrieb der Schwingmühle kommt es zu einer kraftvollen Vermahlung durch Prall und Reibung bei einer Frequenz von bis zu 30 Hz und bei bis zu 20 Proben pro Durchlauf. Darüber hinaus ist ein effizienter Zellaufschluss für DNA/RNA- sowie Proteingewinnung möglich. Ein weiteres Anwendungsbeispiel betrifft die Bakterienisolierung von Gewebe zur akkuraten Diagnose von Infektionen.

Die Mahlbecher der bekannten Schwingmühle führen in horizontaler Ebene kreisbogenförmige Schwingungen aus. Durch die Trägheit der Kugeln schlagen diese mit hoher Energie auf das an den abgerundeten Stirnflächen der Mahlbecher befindliche Probengut auf, wodurch dieses zerkleinert wird. Aufgrund der Becherbewegung und des Bewegungsablaufs der Kugeln findet gleichzeitig eine intensive Mischung statt. Durch Verwendung kleinerer Kugeln kann der Grad der Mischung noch erhöht werden. Bei der Verwendung von vielen kleinen Kugeln, beispielsweise Glasperlen, lassen sich auch biologische Zellen aufschließen. Dabei sorgt die große reibende Schlagwirkung zwischen den Kugeln für effektive Zellaufschlüsse.

Bei kurzen Mahldauern von weniger als 2 min, insbesondere von weniger als 1 min, beispielsweise im Bereich von 30 s oder weniger, kann es bei der bekannten Schwingmühle zu einer ungleichmäßigen Zerkleinerung, Mischung und Homogenisierung eines Probengutes in den von unterschiedlichen Schwingen des Pendelantriebs gehaltenen Mahlbechern kommen. Mit zunehmender Behandlungsdauer der Proben treten Zerkleinerungs-, Mischungs- und Homogenisierungsunterschiede nicht mehr in Erscheinung bzw. werden vergleichmäßigt. Muss die Probenbearbeitung allerdings bei kurzen Mahldauern erfolgen, um beispielsweise eine zu starke Erwärmung des Probenmaterials und/oder unerwünschte Reaktionen des Probenmaterials während der Probenbearbeitung zu vermeiden, ist das ungleichmäßige Zerkleinerungs-, Mischungs- und Homogenisierungsergebnis in den Mahlbechern von Nachteil. Weiter hat sich gezeigt, dass die zuvor beschriebenen Effekte mit zunehmender Masse der Mahlbecher bzw. zunehmender Probenmasse verstärkt auftreten.

Aus der CN 202 447 149 U ist eine Schwingmühle für wenigstens zwei in horizontaler Lage Schwingungen ausführende Mahlbecher bekannt, die einen mehrteiligen Pendel aufweist, wobei der Pendelantrieb wenigstens eine um eine vertikale Exzenterachse drehbar gelagerte Exzenterwelle, wenigstens zwei um eine vertikale Schwingachse schwingfähig gelagerte und über Koppeln mit der Exzenterwelle verbundene Schwingen zur Halterung der Mahlbecher, eine mit der Exzenterwelle gekoppelte Motoreinheit als Antrieb für die Exzenterwelle und gegebenenfalls weitere Bauteile aufweist. Eine Drehbewegung der Exzenterwelle ist über die Koppeln in eine Schwingungsbewegung der Schwingen umwandelbar, wobei der Schwerpunkt des Pendelantriebs in einer horizontalen Schwerpunktebene von beiden Schwingachsen zumindest im Wesentlichen gleichbeabstandet ist. Eine Motoreinheit ist koaxial zur Drehachse der Exzenterwelle angeordnet.

Aufgabe der vorliegenden Erfindung ist es, eine Schwingmühle der eingangs genannten Art zur Verfügung zu stellen, die sich insbesondere bei kurzen Probenbehandlungs- bzw. -bearbeitungsdauern durch ein sehr gleichmäßiges Zerkleinerungs-, Mischungs- und Homogenisierungsergebnis in den von unterschiedlichen Schwingen des Pendelantriebs gehaltenen Mahlbechern auszeichnet, insbesondere auch bei Mahlbechergrößen von mehr als 50 ml. Durch größere Mahlbechervolumina soll die Schwingmühle weiter insbesondere als Konkurrenzgerät von Planetenkugelmühlen einsatzfähig sein.

Die vorgenannte Aufgabe wird durch eine Schwingmühle mit den Merkmalen von Anspruch 1 und durch ein Verfahren mit den Merkmalen von Anspruch 10 gelöst. Vorteilhafte Ausgestaltungen der Erfindung sind Gegenstand der Unteransprüche.

Bei der erfindungsgemäßen Schwingmühle ist der Schwerpunkt bzw. Massenmittelpunkt des Pendelantriebs in einer horizontalen und durch den Schwerpunkt verlaufenden Ebene, nachfolgend "Schwerpunktebene" genannt, von beiden Schwingachsen zumindest im Wesentlichen gleich weit beabstandet. Der Erfindung liegt der Grundgedanke zugrunde, durch relative Anordnung der massenrelevanten Bauteile des Pendelantriebs zueinander eine bestimmte Lage des Schwerpunkts des Pendelantriebs vorzugeben, bei der der Abstand zwischen dem Schwerpunkt und den Pendelachsen im Wesentlichen gleich groß ist. Aus der erfindungsgemäß vorgesehenen Lage des Schwerpunkts des Pendelantriebs mit im Wesentlichen gleichem Abstand zu den Schwingachsen resultieren während des Betriebs der Schwingmühle im Wesentlichen gleiche Schwingungsbewegungen, insbesondere gleiche Frequenzen und gleiche Beschleunigungen, der an unterschiedlichen Schwingen gehaltenen Mahlbecher. Im Vergleich mit der bekannten Schwingmühle lassen sich so bei kurzen Mahldauern von insbesondere weniger als 60 s, weiter insbesondere von weniger als 30 s, beispielsweise bei Mahldauern von 10 s, sehr ähnliche bis weitgehend identische Zerkleinerungs-, Mischungs- und Homogenisierungsergebnisse in den an unterschiedlichen Schwingen gehalterten Mahlbechern erreichen.

Bei kurzen Mahldauern von vorzugsweise weniger als 60 s, weiter vorzugsweise weniger als 30 s, besonders bevorzugt weniger als 10 s, lässt sich insbesondere eine im Wesentlichen gleich breite Korngrößenverteilung in den an unterschiedlichen Schwingen gehaltenen Mahlbechern erreichen. Idealerweise weist die Partikelgrößenverteilung nach solch kurzen Mahldauern in beiden Mahlbechern gleiche d₉₀-Werte auf, wobei "gleiche d₉₀-Werte" im Sinne der Erfindung eine Abweichung der Breiten von zwei Partikelgrößenverteilungen von weniger als 10 %, vorzugsweise von weniger als 5 %, weiter vorzugsweise von weniger als 2%, zulassen kann. Die Bestimmung der Partikelgrößenverteilungen kann in an sich aus dem Stand der Technik bekannter Weise durch Siebung gemäß DIN 66165 erfolgen.

Die Schwerpunktlage des Pendelantriebs der erfindungsgemäßen Schwingmühle lässt eine Vermahlung durch Prall und Reibung auch mit höheren Frequenzen als 30 Hz zu, beispielsweise mit 35 Hz oder auch mit noch höheren Frequenzen.

"Im Wesentlichen gleich weit beabstandet" kann der Schwerpunkt des Pendelantriebs zu den Schwingachsen im Sinne der Erfindung auch dann sein, wenn der Abstand des Schwerpunkts des Pendelantriebs zu einer Schwingachse (geringfügig) größer ist als der Abstand zur anderen Schwingachse. So kann der Abstand des Schwerpunkts zu einer etwas weiter entfernt liegenden Schwingachse weniger als 15 %, vorzugsweise weniger als 10 %, größer sein als der Abstand zur näherliegenden Schwingachse, bezogen auf den Abstand des Schwerpunkts zur näherliegenden Schwingachse.

Bei einer besonders bevorzugten Ausführungsform der Erfindung weist der Schwerpunkt des Pendelantriebs in der Schwerpunktebene einen identischen Abstand zu beiden Schwingachsen auf.

Die Baueinheit "Pendelantrieb" im Sinne der Erfindung umfasst neben der Motoreinheit zumindest oder auch lediglich die Exzenterwelle und deren Wellenlagerung, die Koppeln und die Schwingen und deren Lagerteile. Darüber hinaus kann die Baueinheit "Pendelantrieb" vorzugsweise weitere massenrelevante Bauteile umfassen, wie beispielsweise ein Ausgleichsgewicht, deren Anordnung relativ zueinander einen spürbaren Einfluss auf die Lage des Schwerpunkts hat.

Die Lage des Schwerpunkts des Pendelantriebs wird grundsätzlich beeinflusst durch die Masse und Geometrie aller massenrelevanten Bauteile des Pendelantriebs sowie deren Anordnung relativ zueinander. Die Ermittlung des Schwerpunkts des Pendelantriebs kann rechnerisch im Wesentlich exakt unter Berücksichtigung aller Bauteile des Pendelantriebs erfolgen. In einer Näherung kann die Lage des Schwerpunkts des Pendelantriebs aber auch ermittelt werden lediglich unter Berücksichtigung einer Anordnung gebildet aus der Motoreinheit, der Exzenterwelle und deren Wellenlagerung, der Koppeln, der Schwingen und der Lagerteile, über die die Schwingen drehbar bzw. schwingfähig gelagert sind. Von wesentlicher Bedeutung für die Lage des Schwerpunkts kann aufgrund des hohen Gewichts die Anordnung der Motoreinheit relativ zu den weiteren massenrelevanten Bauteilen des Pendelantriebs, insbesondere relativ zu der Exzenterwelle und der Wellenlagerung sowie relativ zu den über die Koppeln mit der Exzenterwelle verbundenen Schwingen und deren Lagerteilen sein.

Besonders bevorzugt umfasst die Baueinheit "Pendelantrieb" im Sinne der Erfindung eine ein- oder mehrteilige gemeinsame Grundplatte, auf der die Motoreinheit, die Exzenterwelle und deren Wellenlagerung sowie die über die Koppeln mit der Exzenterwelle verbundenen Schwingen und deren Lagerteile abgestützt und/oder gelagert und/oder gehaltert sind. Darüber hinaus können weitere Bauteile des Pendelantriebs auf der Grundplatte abgestützt und/oder gelagert und/oder gehalten sein. Die Ermittlung des Schwerpunktes des Pendelantriebs kann dann näherungsweise lediglich unter Berücksichtigung der Motoreinheit, der Exzenterwelle und deren Wellenlagerung, der Koppeln, der Schwingen und deren Lagerteilen sowie der Grundplatte erfolgen.

Die Motoreinheit, die Wellenlagerung und die Schwingen sowie gegebenenfalls weitere Bauteile können auf einer gemeinsamen Grundplatte angeordnet und/oder gelagert sein und zusammen mit der Grundplatte ein schwingfähiges System bilden. Beim Betrieb der Schwingmühle führen insbesondere die Motoreinheit und die Exzenterwelle sowie gegebenenfalls weitere Bauteile, wie die Schwingen, Schwingungsbewegungen aus, die an die Grundplatte übertragen werden. Auch können Riemenschwingungen eines zur Drehmomentübertragung von einer Motorwelle an die Exzenterwelle vorgesehenen Zahnriemens an die Grundplatte übertragen werden. Vorzugsweise wird die Lage des Schwerpunkts durch Anordnung der Bauteile des Pendelantriebs relativ zueinander, insbesondere durch Anordnung der Motoreinheit relativ zur Exzenterwelle und zu den Schwingen, so gelegt, dass sich Schwingungen der Grundplatte weitestgehend kompensieren. Insbesondere soll durch eine bestimmte Lage des Schwerpunkts des Pendelantriebs erreicht werden, dass Schwingungen, die im Bereich der Motoreinheit und im Bereich der Exzenterwelle an die Grundplatte übertragen werden, weitestgehend kompensiert werden.

Um die Schwingmühle vor Schwingungsimmissionen bzw. dynamischer Beanspruchung aus der Umgebung und/oder um die Umgebung vor Schwingungsemissionen bzw. dynamischer Beanspruchung aus der Schwingmühle zu schützen, kann die Grundplatte über Elemente mit elastischen und dämpfenden Eigenschaften (Feder-/Dämpfer-Elemente) auf einem Bodenteil der Schwingmühle oder einem sonstigen Untergrund aufgestellt bzw. gelagert sein.

Die für den Einsatz der erfindungsgemäßen Schwingmühle vorgesehenen Mahlbecher können beispielsweise ein Füllvolumen von 1,5 ml, 5 ml, 10 ml, 25 ml oder 35 ml aufweisen. Durch die erfindungsgemäß vorgesehene gleiche Beabstandung des Schwerpunkts des Pendelantriebs von den Schwingachsen der Mahlbecher und die daraus resultierenden gleichen Bewegungen der Mahlbecher können bei der erfindungsgemäßen Schwingmühle aber auch Mahlbecher mit einem Füllvolumen von mehr als 30 ml, beispielsweise von 50 ml, oder sogar von 80 ml oder mehr eingesetzt werden. Füllvolumina von 125 ml, 200 ml oder sogar 500 ml sind grundsätzlich nicht ausgeschlossen. Damit werden der erfindungsgemäßen Schwingmühle insbesondere Anwendungsbereiche erschlossen, in denen bislang üblicherweise Planetenkugelmühlen zum Einsatz gekommen sind.

Insbesondere dann, wenn Mahlbecherhalterungen, beispielsweise Adapterplatten, mit denen die Mahlbecher an den Schwingachsen des Pendelantriebs befestigt sind, und/oder Mahlbecher ausgetauscht und durch Mahlbecherhalterungen und/oder Mahlbecher mit anderer Masse und/oder anderer Geometrie ersetzt werden, ändert sich auch die Lage des Schwerpunkts des Pendelantriebs. Um dann sicherzustellen, dass der Schwerpunkt des Pendelantriebs gleichwohl von beiden Schwingachsen zumindest im Wesentlichen gleich weit beabstandet ist, sieht das erfindungsgemäße Verfahren vor, die Lage des Schwerpunkts des Pendelantriebs durch vorzugsweise automatische Verstellung der Position der Motoreinheit und/oder der Position von wenigstens einem Ausgleichsgewicht des Pendelantriebs so zu verändern, dass der Schwerpunkt des Pendelantriebs von beiden Schwingachsen wieder zumindest im Wesentlichen gleichbeabstandet ist. Bei spiegelsymmetrischer Anordnung der Exzenterachsen kann beispielsweise vorgesehen sein, die Motoreinheit mittels entsprechender Führungen automatisch oder manuell entlang und/oder quer zur Symmetrieachse auf der Grundplatte zu verschieben und/oder an bestimmten vorgegebenen Positionen entlang oder quer zur Symmetrieachse an der Grundplatte festzusetzen.

Wird eine Mahlbecherhalterung gegen eine Mahlbecherhalterung mit anderer Geometrie ausgetauscht und kommt es infolge des Austausches zu einer Veränderung des Abstandes zwischen der Schwingachse und einem an der Mahlbecherhalterung gehaltenen Mahlbecher, so ändert sich entsprechend auch der Schwingweg des Mahlbechers beim Betrieb der Schwingmühle und die Lage des Schwerpunkts des Pendelantriebs. Das Gleiche kann bei einem Mahlbecherwechsel der Fall sein. In diesem Zusammenhang kann eine Messeinrichtung vorgesehen sein, um automatisch den Schwingweg und/oder (unterschiedliche) Schwingungen der Mahlbecher zu erfassen bzw. zu messen. In Abhängigkeit von den Messwerten kann dann mit einer Mess-, Steuer- und/oder Regelungseinrichtung eine automatische Korrektur der Lage des Schwerpunkts vorgesehen sein. Zu diesem Zweck kann beispielsweise eine automatische Positionsänderung der Motoreinheit und/oder eines Ausgleichsgewichtes des Pendelantriebs erfolgen, um eine bestimmte Lage des Schwerpunkts des Pendelantriebs zu erreichen, bei der sich insbesondere die von der Motoreinheit und der Exzenterwelle auf die Grundplatte übertragenden Schwingungen (wieder) weitgehend kompensieren.

Die Motoreinheit (bezogen auf deren vertikale Schwerpunktachse), die Exzenterwelle (bezogen auf deren Exzenterachse) und die Schwingen (bezogen auf deren Schwingachsen) können symmetrisch zueinander angeordnet sein. Vorzugsweise liegt der Schwerpunkt des Pendelantriebs in der Schwerpunktebene auf der Symmetrieachse. Der Pendelantrieb kann dann einen stringent symmetrischen Aufbau aufweisen, um ein sehr gleichmäßiges Zerkleinerungs-, Mischungs- und Homogenisierungsergebnis in den an unterschiedlichen Schwingen des Pendelantriebs gehaltenen Mahlbechern zu erzielen.

Es ist zweckmäßig, wenn der Schwerpunkt des Pendelantriebs und die Schwingachsen in der Schwerpunktebene (bezogen auf die Schnittpunkte der Achsen mit der Ebene) ein vorzugsweise gleichschenkliges Dreieck aufspannen. Die vertikale Exzenterachse kann dabei die Seitenhalbierende der durch die Schwingachsen verlaufenden Seitenlinie des in der Schwerpunktebene aufgespannten Dreiecks schneiden. Vorzugsweise kann die Exzenterachse die Seitenhalbierende mittig schneiden. Der Schnittpunkt liegt damit innerhalb der Dreiecksfläche des aufgespannten Dreiecks.

Im Übrigen können die Schwingachsen in der Schwerpunktebene (bezogen auf die Schnittpunkte der Achsen mit der Ebene) spiegelsymmetrisch zur Exzenterachse angeordnet sein und mit der Exzenterachse ebenfalls ein gleichschenkliges Dreieck aufspannen.

Weiter bevorzugt ist zur Lösung der oben genannten Aufgabe eine Anordnung der Bauteile vorgesehen, bei der die Schwingachsen und eine vertikale Achse durch den Schwerpunkt der Motoreinheit in der Schwerpunktebene (bezogen auf die Schnittpunkte der Achsen mit der Ebene) ein gleichschenkliges Dreieck aufspannen. Der Schwerpunkt des Pendelantriebs kann besonders bevorzugt auf der Seitenhalbierenden der durch die Schwingachsen verlaufenden Seitenlinie des aufgespannten Dreiecks liegen. Die Seitenhalbierende verbindet in der Schwerpunktebene die vertikale Achse durch den Schwerpunkt der Motoreinheit und die durch die Schwingachsen verlaufende Seitenlinie des aufgespannten Dreiecks. Der Schwerpunkt des Pendelantriebs liegt zwischen der vertikalen Schwerpunktachse der Motoreinheit und der Exzenterachse. Der Abstand des Schwerpunkts des Pendelantriebs zum Mittelpunkt der Seitenhalbierenden des aufgespannten Dreiecks beträgt beispielsweise weniger als 20%, vorzugsweise weniger als 15%, weiter vorzugsweise weniger als 10%, der halben Länge der Seitenhalbierenden. Der Schwerpunkt des Pendelantriebs kann dann gegenüber dem Mittelpunkt der Seitenhalbierenden in Richtung zur Exzenterachse versetzt sein. Mit anderen Worten ausgedrückt ist eine Bauteilanordnung des Pendelantriebs vorgesehen, bei der der Schwerpunkt des Pendelantriebs benachbart zur Exzenterachse liegt.

Nicht ausgeschlossen ist eine Ausführungsform, bei der die Schwingachsen und eine vertikale Schwerpunktachse der Motoreinheit in der Schwerpunktebene (bezogen auf die Schnittpunkte der Achsen mit der Ebene) ein vorzugsweise gleichschenkliges Dreieck aufspannen, der Schwerpunkt des Pendelantriebs jedoch nicht exakt auf der Seitenhalbierenden der durch die Schwingachsen verlaufenden Seitenlinie des aufgespannten Dreiecks liegt. Der seitliche Abstand zwischen dem Schwerpunkt des Pendelantriebs und der Seitenhalbierenden kann dabei weniger als 20 %, vorzugsweise weniger als 15 %, weiter vorzugsweise weniger als 10 %, der halben Länge der durch die Schwingachsen verlaufenden Seitenlinie betragen.

Zur Wellenlagerung der Exzenterwelle und zur Lagerung der Schwingen kann ein rahmen-, gitter- oder gestellartiger Lageraufbau vorgesehen sein, wobei, vorzugsweise, die Exzenterwelle vertikal im Bereich unterhalb der Koppeln über die Grundplatte und vertikal im Bereich oberhalb der Koppeln über eine Traverse gelagert ist, die fest mit der Grundplatte verbunden ist. Seitlich, insbesondere auf der der Motoreinheit zugewandten Seite der Exzenterwelle, kann eine Stützwand vorgesehen sein, die die Traverse mit der Grundplatte verbindet. Eine Stützwand kann zudem auf der Seite der Schwingen vorgesehen sein, ebenfalls zum Verbinden der Traverse mit der Stützplatte. Damit können auf die Lagerung der Exzenterwelle und/oder der Schwingen zurückzuführende Schwingungen der Grundplatte des Pendelantriebs weitgehend reduziert werden, was zu einer Vergleichmäßigung der Mahlergebnisse in den an unterschiedlichen Schwingen gehaltenen Mahlbechern beiträgt.

Zur Veränderung und Einstellung der Lage des Schwerpunkts des Pendelantriebs kann darüber hinaus wenigstens ein vorzugsweise verschieb- und/oder verstellbares Ausgleichsgewicht vorgesehen sein. Dies lässt es grundsätzlich zu, von einem streng symmetrischen Aufbau des Pendelantriebs abzuweichen. Insbesondere ist es durch die Verwendung von wenigstens einem Ausgleichsgewicht möglich, die Motoreinheit nicht symmetrisch zur Exzenterwelle und den Schwingen anordnen zu müssen und gleichwohl eine Lage des Schwerpunkts zu erreichen, in der Schwingen der Grundplatte weitgehend kompensiert werden.

Eine Veränderung der Lage des Schwerpunkts des Pendelantriebs kann insbesondere Folge der Verwendung unterschiedlich ausgebildeter Mahlbecherhalterungen sein.

Die Erfindung wird nachfolgend anhand eines Ausführungsbeispiels näher erläutert. Dabei bilden alle beschriebenen und/oder zeichnerisch dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigen
- Fig. 1: eine Teilansicht einer aus dem Stand der Technik bekannten Schwingmühle mit einem mehrteiligen Pendelantrieb von oben,
- Fig. 2: eine Draufsicht auf den Pendelantrieb einer erfindungsgemäßen Schwingmühle,
- Fig. 3: eine Frontansicht des Pendelantriebs aus Fig. 2,
- Fig. 4: eine Ansicht des in Fig. 2 gezeigten Pendelantriebs von unten,
- Fig. 5: eine Schnittansicht des Pendelantriebs aus Fig. 2 entlang der Schnittlinie V-V,
- Fig. 6: eine Schnittansicht des in Fig. 2 dargestellten Pendelantriebs entlang der Schnittlinie VI-VI und
- Fig. 7: eine Schnittansicht des in Fig. 2 gezeigten Pendelantriebs entlang der Schnittlinie VII-VII aus Fig. 3.

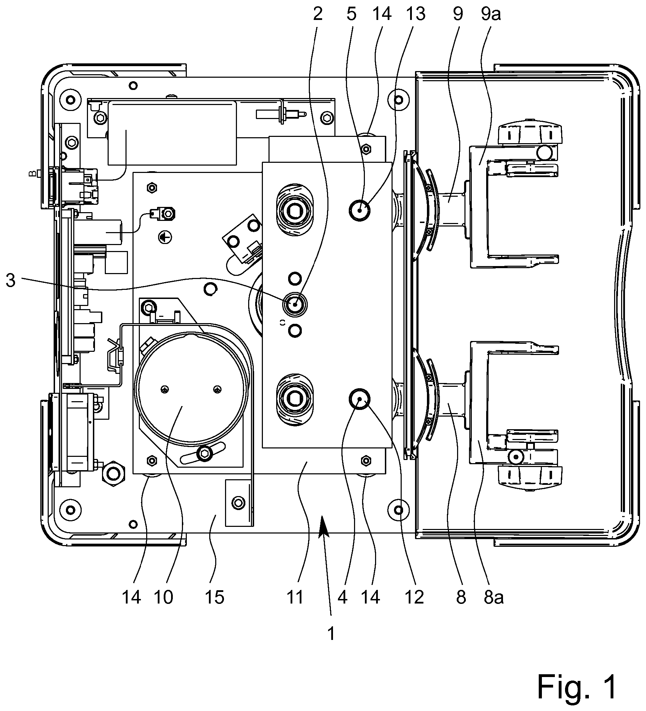

Fig. 1 zeigt eine Draufsicht auf den Pendelantrieb 1 einer aus dem Stand der Technik bekannten Schwingmühle für zwei in horizontaler Lage kreisbogenförmige Schwingungen ausführende und nicht dargestellte Mahlbecher. Der Pendelantrieb 1 ist mehrteilig ausgebildet mit einer um eine vertikale Exzenterachse 2 drehbar gelagerten Exzenterwelle 3 und mit zwei jeweils um eine vertikale Schwingachse 4, 5 schwingfähig gelagerten und über Koppeln mit der Exzenterwelle 3 verbundenen Schwingen 8, 9. An den Schwingen 8, 9 sind Mahlbecherhalterungen 8a, 9a für nicht gezeigte Mahlbecher befestigt. Im Übrigen ist eine mit der Exzenterwelle 3 über einen nicht gezeigten Keilriemen gekoppelte Motoreinheit 10 für eine Drehmomentübertragung vorgesehen. Die Exzenterwelle 3 ist an einer Grundplatte 11 drehbar gelagert. An der Grundplatte 11 sind darüber hinaus zwei Lagerbolzen 12, 13 befestigt, um die die Schwingen 8, 9 drehbar gelagert sind. Schließlich ist die Motoreinheit 10 auf der Grundplatte 11 angeordnet. Die Exzenterwelle 3, die Lagerbolzen 12, 13 und die Motoreinheit 10 bilden so zusammen mit der Grundplatte 11 eine Baueinheit, die über Dämpfungselemente 14 auf einem Bodenteil 15 der Schwingmühle aufsteht.

Die Schwingen 8, 9 sind spiegelsymmetrisch zur Exzenterwelle 3 angeordnet, die Exzenterachse 2 liegt auf der Symmetrieachse. Die Motoreinheit 10 liegt mit Bezug auf Fig. 1 unterhalb der Symmetrieachse. Aufgrund des hohen Gewichts der Motoreinheit 10 liegt der Schwerpunkt des Pendelantriebs 1 benachbart zur Motoreinheit 10.

Die Motoreinheit 10 überträgt ein Drehmoment über den Keilriemen an die Exzenterwelle 3. Eine Drehbewegung der Exzenterwelle 3 wird über die Koppeln in eine Schwingungsbewegung der Schwingen 8, 9 umgewandelt.

Beim Betrieb der bekannten Schwingmühle zeigt sich bei kurzen Mahldauern insbesondere von weniger als 60 s, weiter insbesondere von weniger als 30 s, dass die Zerkleinerungs-, Mischungs- und Homogenisierungsergebnisse in den an unterschiedlichen Schwingen 8, 9 gehalterten Mahlbechern voneinander abweichen können. Bei größeren Mahldauern dagegen kommt es zu einer Vergleichmäßigung der Ergebnisse der Probenbehandlung in den Mahlbechern, wobei beispielsweise nach Mahldauern von mehr als 2 min die Partikelgrößenverteilung in den an unterschiedlichen Schwingen 8, 9 gehaltenen Mahlbechern eine im Wesentlichen gleiche Breite aufweisen kann.

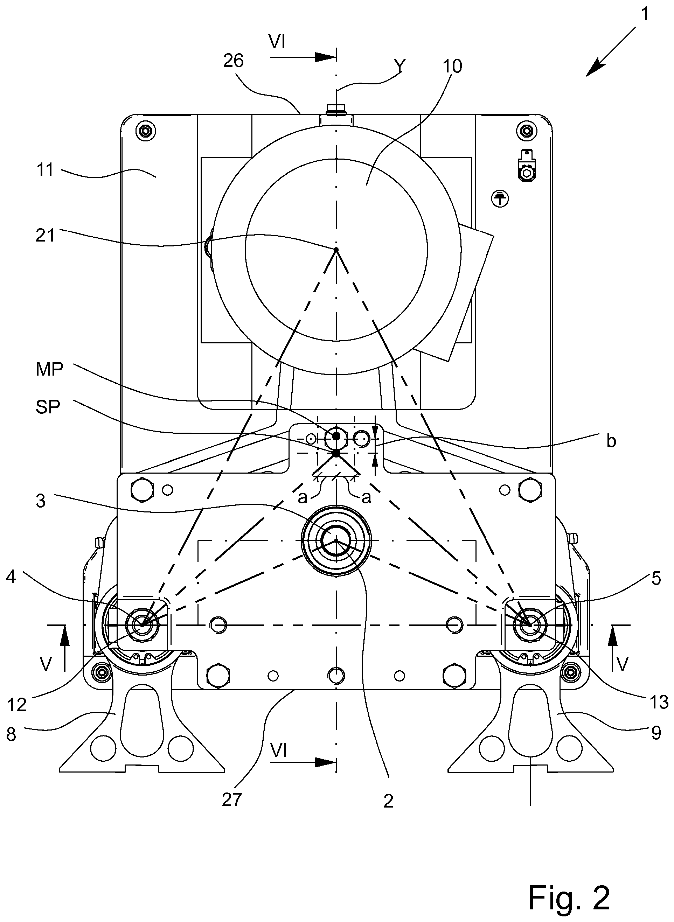

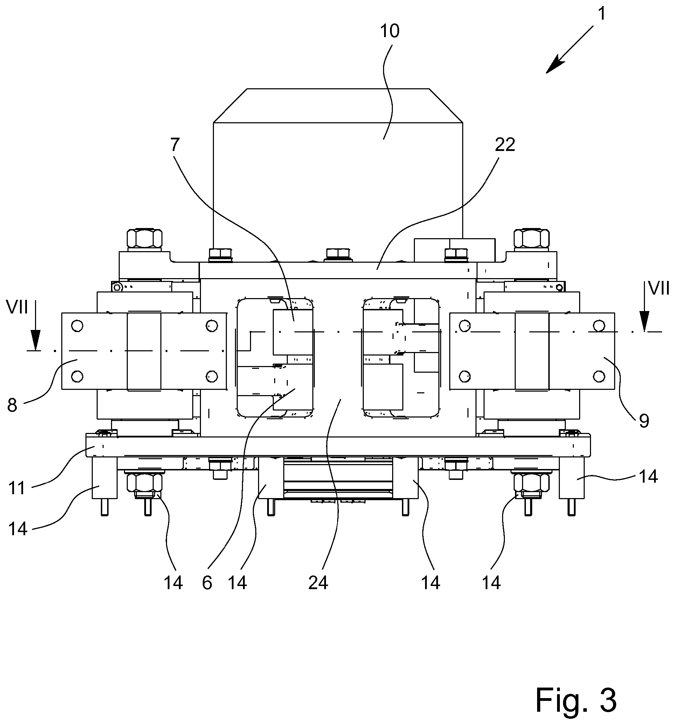

In den Figuren 2 bis 7 ist eine weiterentwickelte Ausführungsform einer Schwingmühle für wenigstens zwei in horizontaler Lage Schwingungen ausführende Mahlbecher dargestellt, wobei Mahlbecherhalterungen und Mahlbecher nicht gezeigt sind. Die Schwingmühle weist einen mehrteiligen Pendelantrieb 1 auf, dessen Grundaufbau ähnlich zu dem Grundaufbau des in Fig. 1 gezeigten Pendelantriebs 1 ist. Konstruktions- und/oder funktionsgleiche Bauteile der in den Figuren 1 bis 7 dargestellten Pendelantriebe 1 sind mit gleichen Bezugszeichen gekennzeichnet.

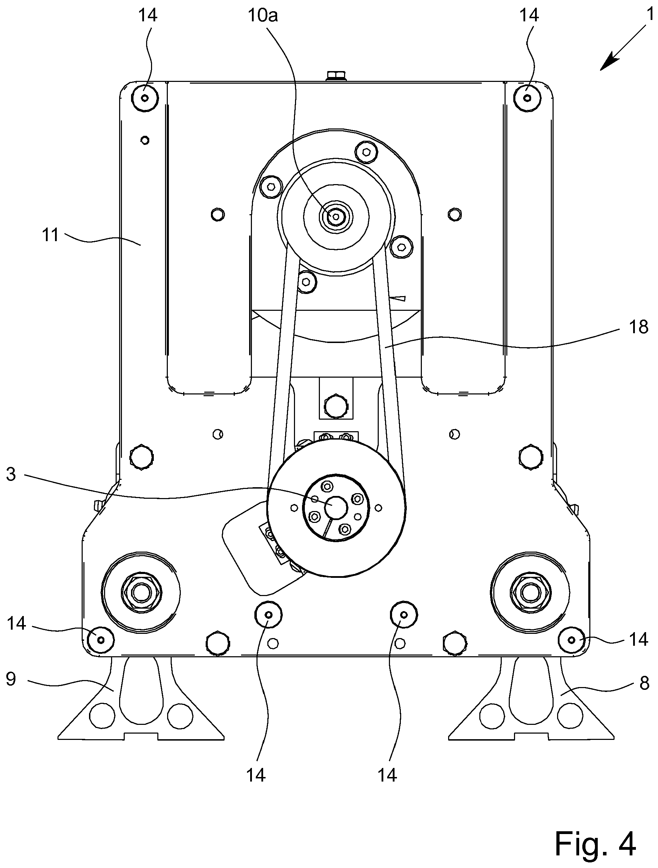

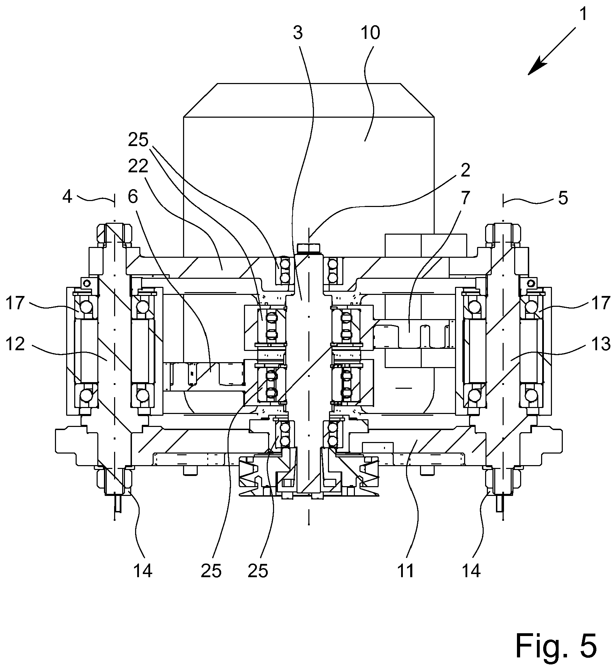

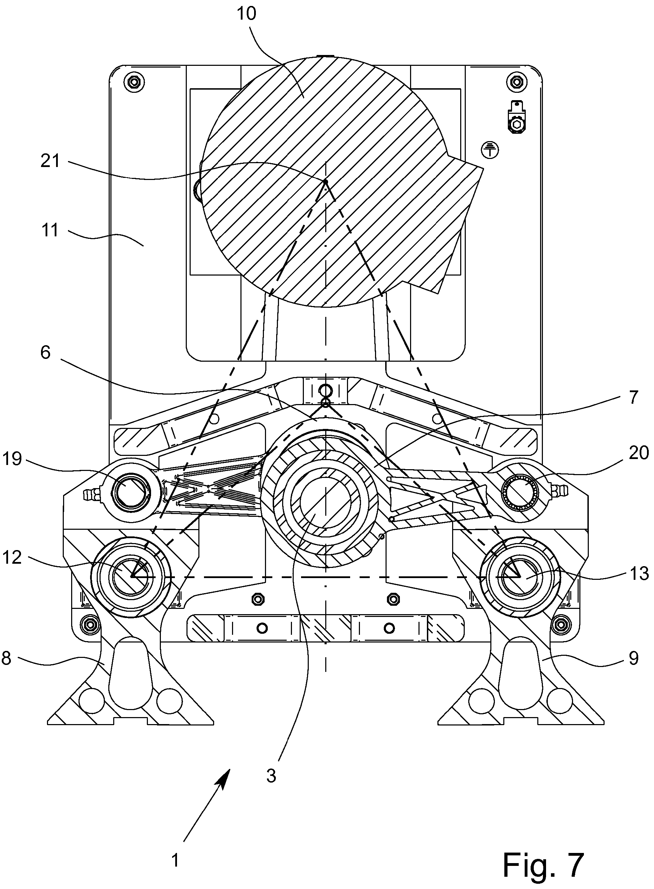

Der Pendelantrieb 1 der in den Figuren 2 bis 7 gezeigten Schwingmühle weist ebenfalls eine vertikale Exzenterachse 2 auf, um die eine Exzenterwelle 3 drehbar gelagert ist. Darüber hinaus sind zwei Schwingen 8, 9 zur Halterung von Mahlbechern vorgesehen, wobei die Schwingen 8, 9 mit nicht dargestellten Mahlbecherhalterungen verbindbar sind. Die Schwingen 8, 9 sind über Kugellager 17 (Fig. 5) um vertikale Schwingachsen 4, 5 drehbar an Lagerbolzen 12, 13 gehalten. Darüber hinaus sind die Schwingen 8, 9 über Koppeln 6, 7 (Fig. 7) mit der Exzenterwelle 3 verbunden. Die Koppeln 6, 7 sind dazu dreh- oder schwenkbar an Bolzen 19, 20 (Fig. 7) der Schwingen 8, 9 und an Exzentern 19a, 20a der Exzenterwelle 3 gehalten. Damit ist eine Drehbewegung der Exzenterwelle 3 über die Koppeln 6, 7 in entgegengesetzte Schwingungsbewegungen der Schwingen 8, 9 umwandelbar. Zum Antrieb der Exzenterwelle 3 ist eine Motoreinheit 10 vorgesehen, wobei eine Motorwelle 10a über einen Keilriemen 18 (Fig. 4) an der Unterseite des Pendelantriebs 1 ein Drehmoment an die Exzenterwelle 3 überträgt.

Die Exzenterwelle 3, die Lagerbolzen 12, 13 mit den Schwingen 8, 9 und die Motoreinheit 10 sowie weitere Bauteile des Pendelantriebs 1 sind auf einer Grundplatte 11 gelagert bzw. abgestützt. Die Grundplatte 11 steht über Dämpfungselemente 14, beispielswiese Gummi-/Feder-Elemente, auf einem nicht gezeigten Bodenteil der Schwingmühle oder auf einem Untergrund auf. Der Pendelantrieb 1 umfasst damit insbesondere die Exzenterwelle 3 und deren Lagerteile, die Schwingen 8, 9 und deren Lagerteile, die Koppeln 6, 7 und die Motoreinheit 10 sowie die Grundplatte 11 und gegebenenfalls weitere Bauteile.

Um insbesondere bei kurzen Mahldauern von weniger als 120 s, vorzugsweise von weniger als 60 s, weiter vorzugsweise von weniger als 30 sec, beispielsweise bei einer Mahldauer von 10 s, vergleichbare Mahlergebnisse im Hinblick auf den Zerkleinerungsgrad, das Mischungs- und/oder Homogenisierungsergebnis des Mahlvorgangs, insbesondere im Hinblick auf eine möglichst gleiche Breite der Partikelgrößenverteilung in an unterschiedlichen Schwingen 8, 9 gehaltenen Mahlbechern zu erhalten, ist bei der in den Figuren 2 bis 7 gezeigten Schwingmühle vorgesehen, den schematisch in Fig. 2 gezeigten Schwerpunkt SP des Pendelantriebs 1 durch Anordnung der Bauteile des Pendelantriebs 1 so vorzugeben, dass der Schwerpunkt SP von beiden Schwingachsen 4, 5 gleich weit beabstandet ist.

Wie sich insbesondere aus Fig. 2 ergibt, sind die Schwingen 8, 9 spiegelsymmetrisch zur Exzenterwelle 3 und zur Motoreinheit 10 angeordnet, wobei der Schwerpunkt SP des Pendelantriebs 1 auf der Symmetrieachse Y liegt. Auch die Exzenterachse 2 und die vertikale Achse 21 durch den Schwerpunkt der Motoreinheit 10 liegen auf der Symmetrieachse Y.

Hierbei wird durch den Schwerpunkt SP des Pendelantriebs 1 und die Schwingachsen 4, 5 in einer horizontalen Schwerpunktebene durch den Schwerpunkt SP ein gleichschenkliges Dreieck aufgespannt. Die Exzenterachse 2 schneidet die Seitenhalbierende der durch die Schwingachsen 4, 5 verlaufenden Seitenlinie des in der Schwerpunkteebene von dem Schwerpunkt SP des Pendelantriebs 1 und den Schwingachsen 4, 5 aufgespannten Dreiecks vorzugsweise mittig.

Darüber hinaus ergibt sich aus Fig. 2, dass - wie bei der Schwingmühle aus Fig. 1 - die Schwingachsen 4, 5 spiegelsymmetrisch zur Exzenterachse 2 angeordnet sind und deren Schnittpunkte mit der Schwerpunktebene ein gleichschenkliges Dreieck aufspannen.

Abweichend zu der in Fig. 1 gezeigten Schwingmühle ist bei der in den Figuren 2 bis 7 gezeigten Schwingmühle vorgesehen, dass die Schwingachsen 4, 5 und die vertikale Achse 21 durch den Schwerpunkt der Motoreinheit 10 in der Schwerpunktebene ebenfalls ein gleichschenkliges Dreieck aufspannen. Durch Anordnung der Motoreinheit 10 so, dass die vertikale Schwerpunktachse der Motoreinheit 10 auf der Symmetrieachse Y liegt, wird der Schwerpunkt des Pendelantriebs 1 auf die Symmetrieachse Y verschoben, was zu einem stringent symmetrischen Aufbau des Pendelantriebs 1 führt und beim Betrieb der Schwingmühle gleiche (entgegengesetzte) Schwingungsbewegungen der Mahlbecher, insbesondere gleiche Frequenzen und Beschleunigungen, gewährleistet.

Weiter ergibt sich aus Fig. 2, dass der Schwerpunkt SP des Pendelantriebs 1 auf der Seitenhalbierenden der durch die Schwingachsen 4, 5 verlaufenden Seitenlinie des in der Schwerpunktebene von den Schwingachsen 4, 5 und der vertikalen Achse 21 durch den Schwerpunkt der Motoreinheit 10 aufgespannten Dreiecks liegt.

Der aus der Masse, Geometrie und Anordnung der Bauteile des Pendelantriebs 1 resultierende Schwerpunkt SP des Pendelantriebs 1 kann gegenüber der in Fig. 2 gezeigten Lage, wo der Schwerpunkt SP exakt auf der Symmetrieachse Y liegt, auch seitlich gegenüber der Symmetrieachse Y in Richtung einer der Schwingachsen 4, 5 verschoben sein. So kann der seitliche Abstand a des Schwerpunkts SP des Pendelantriebs 1 von der Symmetrieachse Y weniger als 20 %, vorzugsweise weniger als 15 %, weiter vorzugsweise weniger als 10 % besonders bevorzugt weniger als 5 %, des halben Abstands zwischen den Schwingachsen 4, 5 betragen.

Beim Betrieb der Schwingmühle werden Schwingungen der Motoreinheit 10 und der Exzenterwelle 3 sowie, gegebenenfalls, Schwingungen des Riementriebs, auf die Grundplatte 11 übertragen. Der Schwerpunkts SP des Pendelantriebs 1 kann durch Anordnung der Motoreinheit 10 relativ zu den anderen Bauteilen des Pendelantriebs 1 so gelegt sein, dass sich Schwingungen der Grundplatte 11 an dem rückseitigen der Motoreinheit 10 zugewandtem Außenrand 26 der Grundplatte 11 und an dem vorderseitigen den Schwingen 8, 9 zugewandtem Außenrand 27 zumindest im Wesentlichen kompensieren.

Der Schwerpunkt SP des Pendelantriebs 1 ist bei der gezeigten Ausführungsform gegenüber dem Mittelpunkt MP der Seitenhalbierenden des durch die vertikale Achse 21 und die Schwingachsen 4, 5 in der Schwerpunktebene gebildeten Dreiecks in Richtung zur Exzenterachse 2 verschoben. Der Abstand b des Schwerpunkts SP des Pendelantriebs 1 zum Mittelpunkt MP (Fig. 2) der Seitenhalbierenden kann weniger als 20 %, vorzugsweise weniger als 15 %, weiter vorzugsweise weniger als 10 %, der halben Länge der Seitenhalbierenden betragen.

Darüber hinaus kann der Schwerpunkt SP des Pendelantriebs 1 in Abhängigkeit von der Masse und Geometrie sowie Anordnung der Bauteile des Pendelantriebs 1 bei einer anderen Ausführungsform grundsätzlich auch gegenüber dem Mittelpunkt MP in Richtung zur vertikalen durch den Schwerpunkt der Motoreinheit 10 verlaufenden Achse 21 verschoben sein.

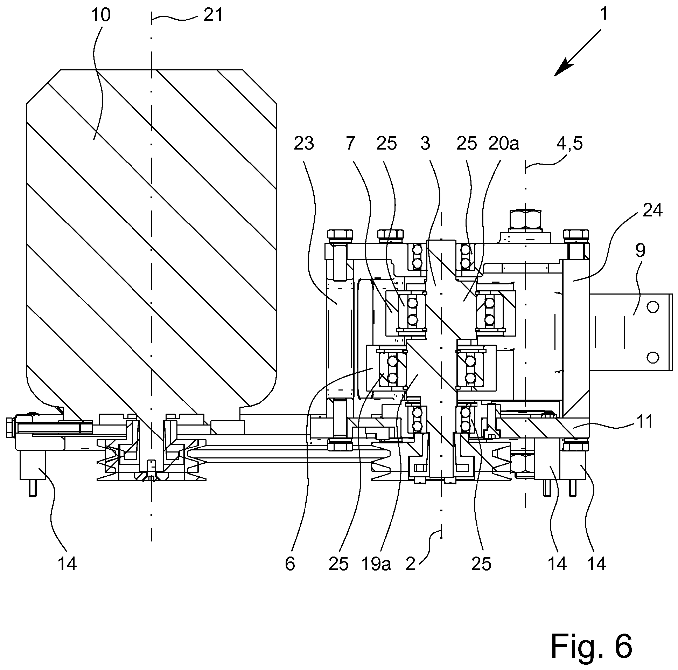

Wie sich insbesondere aus Fig. 5 ergibt, ist die Exzenterwelle 3 vertikal im Bereich unterhalb und oberhalb der Koppeln 6, 7 über die Grundplatte 11 einerseits und eine Traverse 22 andererseits gelagert bzw. gehalten. Darüber hinaus sind eine hintere Stützwand 23 und eine vordere Stützwand 24 (Fig. 6) vorgesehen, über die die Traverse 22 mit der Grundplatte 11 verbunden ist. Daraus resultiert ein rahmen-, gitter- oder gestellartiger Lageraufbau für die Exzenterwelle 3, um ein ungünstiges Schwingungsverhalten der Wellenlagerung bei Betrieb der Schwingmühle möglichst auszuschließen. Im Übrigen sind die Schwingen 8, 9 über die Lagerbolzen 12, 13 in dem Lageraufbau gehalten und gelagert.

Die Lagerung der Schwingen 8, 9 an den Lagerbolzen 12, 13 erfolgt vorzugsweise über Schrägkugellager 17 (Fig. 5). Die Lagerung der Koppeln 6, 7 an den Bolzen 19, 20 kann über Nadellager erfolgen. Die Lagerung der Koppeln 6, 7 an der Exzenterwelle 3 und die Lagerung der Exzenterwelle 3 an der Grundplatte 11 und der Traverse 22 erfolgt vorzugsweise über Rillenkugellager 25, was in Fig. 6 gezeigt ist.

### Bezugszeichenliste:

- 1: Pendelantrieb
- 2: Exzenterachse
- 3: Exzenterwelle
- 4: Schwingachse
- 5: Schwingachse
- 6: Koppel
- 7: Koppel
- 8: Schwinge
- 8a: Mahlbecherhalterung
- 9: Schwinge
- 9a: Mahlbecherhalterung
- 10: Motoreinheit
- 10a: Motorwelle
- 11: Grundplatte
- 12: Lagerbolzen
- 13: Lagerbolzen
- 14: Dämpfungselement
- 15: Bodenteil
- 16: Riemen
- 17: Schrägkugellager
- 18: Keilriemen
- 19: Bolzen
- 19a: Exzenter
- 20: Bolzen
- 20a: Exzenter
- 21: Achse
- 22: Traverse
- 23: Stützwand
- 24: Stützwand
- 25: Rillenkugellager
- 26: Außenrand
- 27: Außenrand
- Y: Symmetrieachse

## Patentansprüche

1. Schwingmühle für wenigstens zwei in horizontaler Lage Schwingungen ausführende Mahlbecher, mit einem mehrteiligen Pendelantrieb (1), wobei der Pendelantrieb (1) wenigstens eine um eine vertikale Exzenterachse (2) drehbar gelagerte Exzenterwelle (3), wenigstens zwei jeweils um eine vertikale Schwingachse (4, 5) schwingfähig gelagerte und über Koppeln (6, 7) mit der Exzenterwelle (3) verbundene Schwingen (8, 9) zur Halterung der Mahlbecher, eine mit der Exzenterwelle (3) gekoppelte Motoreinheit (10) als Antrieb für die Exzenterwelle (3) und gegebenenfalls weitere Bauteile aufweist, wobei eine Drehbewegung der Exzenterwelle (3) über die Koppeln (6, 7) in eine Schwingungsbewegung der Schwingen (8, 9) umwandelbar ist und wobei der Schwerpunkt des Pendelantriebs (1) in einer horizontalen Schwerpunktebene von beiden Schwingachsen (4, 5) zumindest im Wesentlichen gleichbeabstandet ist, **dadurch gekennzeichnet, dass** der Schwerpunkt des Pendelantriebs (1) zwischen der vertikalen Schwerpunktachse der Motoreinheit (10) und der Exzenterachse (2) liegt.

2. Schwingmühle nach Anspruch 1, **dadurch gekennzeichnet, dass** die Motoreinheit (10), die Exzenterwelle (3) und die Schwingen (8, 9) sowie gegebenenfalls weitere Bauteile des Pendelantriebs (1) auf einer gemeinsamen Grundplatte (15) angeordnet und/oder gelagert sind und zusammen mit der Grundplatte (15) ein schwingungsfähiges System bilden.

3. Schwingmühle nach Anspruch 1 oder 2, **dadurch gekennzeichnet, dass** die Schwingen (8, 9) spiegelsymmetrisch zur Motoreinheit (10) und/oder zur Exzenterwelle (3) angeordnet sind und dass, vorzugsweise, der Schwerpunkt des Pendelantriebs (1) auf der Symmetrieachse liegt.

4. Schwingmühle nach einem der vorhergehenden Ansprüche, **dadurch gekennzeichnet, dass** der Schwerpunkt des Pendelantriebs (1) und die Schwingachsen (4, 5) in der Schwerpunktebene ein vorzugsweise gleichschenkliges Dreieck aufspannen.

5. Schwingmühle nach einem der vorhergehenden Ansprüche, **dadurch gekennzeichnet, dass** die Exzenterachse (2) die Seitenhalbierende der durch die Schwingachsen (4, 5) verlaufenden Seitenlinie des in der Schwerpunktebene von dem Schwerpunkt des Pendelantriebs (1) und den Schwingachsen (4, 5) aufgespannten Dreiecks schneidet.

6. Schwingmühle nach einem der vorhergehenden Ansprüche, **dadurch gekennzeichnet, dass** die Schwingachsen (4, 5) und eine vertikale Achse (21) durch den Schwerpunkt der Motoreinheit (10) in der Schwerpunktebene ein gleichschenkliges Dreieck aufspannen.

7. Schwingmühle nach einem der vorhergehenden Ansprüche, **dadurch gekennzeichnet, dass** der Schwerpunkt des Pendelantriebs (1) auf der Seitenhalbierenden der durch die Schwingachsen (4, 5) verlaufenden Seitenlinie des in der Schwerpunktebene von den Schwingachsen (4, 5) und der vertikalen Achse (21) durch den Schwerpunkt der Motoreinheit (10) aufgespannten Dreiecks liegt.

8. Schwingmühle nach einem der vorhergehenden Ansprüche, **dadurch gekennzeichnet, dass** ein rahmen-, gitter- oder gestellartiger Lageraufbau zur Wellenlagerung der Exzenterwelle (3) und, vorzugsweise, zur Lagerung der Schwingen (8, 9) vorgesehen ist.

9. Schwingmühle nach einem der vorhergehenden Ansprüche, **dadurch gekennzeichnet, dass** eine Verstelleinrichtung zur vorzugsweise automatischen Verstellung der Position der Motoreinheit (10) und/oder der Position von wenigstens einem Ausgleichsgewicht vorgesehen ist.

10. Verfahren zum Vermahlen eines Mahlgutes mit einer Schwingmühle nach einem der vorhergehenden Ansprüche, **dadurch gekennzeichnet, dass** die Motoreinheit (10) und/oder wenigstens ein Ausgleichsgewicht des Pendelantriebs (1) so verschoben und/oder versetzt wird, dass der Schwerpunkt des Pendelantriebs (1) in einer horizontalen Schwerpunktebene von beiden Schwingachsen (4, 5) zumindest im Wesentlichen gleichbeabstandet ist.

## Claims

1. Vibratory mill for at least two grinding jars which vibrate in a horizontal position, with a multi-part pendulum drive (1), wherein the pendulum drive (1) comprises at least one eccentric shaft (3) mounted so as to rotate about a vertical eccentric axis (2), at least two rocker arms (8, 9), each mounted so as to vibrate about a vertical vibration axis (4, 5) and connected to the eccentric shaft (3) via couplings (6, 7) for holding the grinding jars, a motor unit (10) coupled to the eccentric shaft (3) as a drive for the eccentric shaft (3) and, if necessary, further components, wherein a rotary movement of the eccentric shaft (3) can be converted via the couplings (6, 7) into an oscillating movement of the rockers (8, 9) and wherein the centre of gravity of the pendulum drive (1) is at least substantially equidistant from both oscillating axes (4, 5) in a horizontal centre of gravity plane, **characterised in that** the centre of gravity of the pendulum drive (1) lies between the vertical centre of gravity axis of the motor unit (10) and the eccentric axis (2).

2. Vibratory mill according to claim 1, **characterised in that** the motor unit (10), the eccentric shaft (3) and the rockers (8, 9) and possibly other components of the pendulum drive (1) are arranged and/or mounted on a joint base plate (15) and together with the base plate (15) form a vibrating system.

3. Vibratory mill according to claim 1 or 2, **characterised in that** the rockers (8, 9) are arranged mirror-symmetrically to the motor unit (10) and/or to the eccentric shaft (3) and that, preferably, the centre of gravity of the pendulum drive (1) lies on the axis of symmetry.

4. Vibratory mill according to one of the preceding claims, charcterised in that the centre of gravity of the pendulum drive (1) and the oscillating axes (4, 5) span a preferably isosceles triangle in the plane of the centre of gravity.

5. Vibrating mill according to one of the preceding claims, **characterised in that** the eccentric axis (2) intersects the median of the side line extending through the vibrating axes (4, 5) of the triangle spanned in the centre of gravity plane by the centre of gravity of the pendulum drive (1) and the vibrating axes (4, 5).

6. Vibrating mill according to one of the preceding claims, **characterised in that** the vibrating axes (4, 5) and a vertical axis (21) through the centre of gravity of the motor unit (10) span an isosceles triangle in the centre of gravity plane.

7. A vibrating mill according to one of the preceding claims, **characterised in that** the centre of gravity of the pendulum drive (1) lies on the median of the side line, extending through the vibrating axes (4, 5), of the triangle spanned in the plane of the centre of gravity by the vibrating axes (4, 5) and the vertical axis (21) through the centre of gravity of the motor unit (10).

8. Vibrating mill according to one of the preceding claims, **characterised in that** a frame-, grid- or rack-like bearing structure is provided for the shaft bearing of the eccentric shaft (3) and, preferably, for the bearing of the rockers (8, 9).

9. Vibrating mill according to one of the preceding claims, **characterised in that** an adjusting device is provided for preferably automatically adjusting the position of the motor unit (10) and/or the position of at least one balancing weight.

10. Method for grinding a material to be ground with a vibrating mill according to one of the preceding claims, **characterised in that** the motor unit (10) and/or at least one balancing weight of the pendulum drive (1) is displaced and/or offset in such a way that the centre of gravity of the pendulum drive (1) is at least substantially equally spaced from both oscillating axes (4, 5) in a horizontal centre of gravity plane.

## Revendications

1. Broyeur oscillant pour au moins deux godets de broyage exécutant des oscillations en position horizontale, avec un entraînement pendulaire (1) en plusieurs parties, l'entraînement pendulaire (1) comprenant au moins un arbre excentrique (3) monté à rotation autour d'un axe d'excentrique vertical (2), au moins deux godets de broyage (4, 5, 6, 7) montés chacun autour d'un axe d'oscillation vertical (4, 5) et reliées à l'arbre excentrique (3) par des accouplements (6, 7) pour le maintien des bols de broyage, une unité de moteur (10) couplée à l'arbre excentrique (3) comme entraînement pour l'arbre excentrique (3) et éventuellement d'autres composants, un mouvement de rotation de l'arbre excentrique (3) pouvant être transformé en un mouvement d'oscillation des balanciers (8, 9) par l'intermédiaire des accouplements (6, 7) et le centre de gravité de l'entraînement pendulaire (1) étant situé dans un plan horizontal de centre de gravité à une distance au moins sensiblement égale des deux axes d'oscillation (4, 5), **caractérisé en ce que** le centre de gravité de l'entraînement pendulaire (1) est situé entre l'axe vertical de centre de gravité de l'unité motrice (10) et l'axe d'excentrique (2).

2. Broyeur oscillant selon la revendication 1, **caractérisé en ce que** l'unité de moteur (10), l'arbre excentrique (3) et les balanciers (8, 9) ainsi que, le cas échéant, d'autres composants de l'entraînement pendulaire (1) sont disposés et/ou montés sur une plaque de base commune (15) et forment, avec la plaque de base (15), un système capable d'osciller.

3. Broyeur à balancier selon la revendication 1 ou 2, **caractérisé en ce que** les balanciers (8, 9) sont disposés de manière symétrique par rapport à l'unité de moteur (10) et/ou à l'arbre excentrique (3) et **en ce que**, de préférence, le centre de gravité de l'entraînement à balancier (1) se trouve sur l'axe de symétrie.

4. Broyeur oscillant selon l'une des revendications précédentes, **caractérisé en ce que** le centre de gravité de l'entraînement pendulaire (1) et les axes d'oscillation (4, 5) forment un triangle, de préférence isocèle, dans le plan du centre de gravité.

5. Broyeur oscillant selon l'une des revendications précédentes, **caractérisé en ce que** l'axe d'excentrique (2) coupe la bissectrice de la ligne latérale passant par les axes d'oscillation (4, 5) du triangle formé dans le plan du centre de gravité par le centre de gravité de l'entraînement pendulaire (1) et les axes d'oscillation (4, 5).

6. Broyeur vibrant selon l'une des revendications précédentes, **caractérisé en ce que** les axes de vibration (4, 5) et un axe vertical (21) passant par le centre de gravité de l'unité motrice (10) forment un triangle isocèle dans le plan du centre de gravité.

7. Broyeur oscillant selon l'une des revendications précédentes, **caractérisé en ce que** le centre de gravité de l'entraînement pendulaire (1) est situé sur la bissectrice de la ligne latérale passant par les axes d'oscillation (4, 5) du triangle formé dans le plan du centre de gravité par les axes d'oscillation (4, 5) et l'axe vertical (21) passant par le centre de gravité de l'unité motrice (10).

8. Broyeur vibrant selon l'une des revendications précédentes, **caractérisé en ce qu'**une structure de palier en forme de cadre, de grille ou de bâti est prévue pour le montage de l'arbre de l'excentrique (3) et, de préférence, pour le montage des balanciers (8, 9).

9. Broyeur vibrant selon l'une des revendications précédentes, **caractérisé en ce qu'**il est prévu un dispositif de réglage pour le réglage, de préférence automatique, de la position de l'unité motrice (10) et/ou de la position d'au moins un poids d'équilibrage.

10. Procédé de broyage d'un produit à broyer avec un broyeur oscillant selon l'une des revendications précédentes, **caractérisé en ce que** l'unité de moteur (10) et/ou au moins un poids d'équilibrage de l'entraînement pendulaire (1) est déplacé et/ou décalé de telle sorte que le centre de gravité de l'entraînement pendulaire (1) est au moins sensiblement à la même distance des deux axes d'oscillation (4, 5) dans un plan horizontal du centre de gravité.
